# EUROPÄISCHE PATENTSCHRIFT

(11) **EP 1 344 279 B1**
(45) Veröffentlichungstag und Bekanntmachung des Hinweises auf die Patenterteilung: **08.03.2006**
(21) Anmeldenummer: 01990316.0
(22) Anmeldetag: 18.12.2001
(51) Int. Cl.: H01Q 1/24, H01Q 9/04, H01Q 1/44, H04B 1/38, H04M 1/02

(54) **KOMMUNIKATIONSENDGERÄT MIT ANTENNE**
COMMUNICATION TERMINAL WITH ANTENNA
TERMINAL DE COMMUNICATION A ANTENNE

(30) Priorität: 19.12.2000 DE 10063242
(43) Veröffentlichungstag der Anmeldung: 17.09.2003
(73) Patentinhaber: SIEMENS AKTIENGESELLSCHAFT, 80333 München (DE)
(72) Erfinder: MÄHRINGER, Claus, 47506 Neukirchen-Vluyn (DE)
(86) Internationale Anmeldenummer: PCT/DE2001/004788
(87) Internationale Veröffentlichungsnummer: WO 2002/050944

(56) Entgegenhaltungen:
- EP-A- 0 924 793
- EP-A- 1 184 936
- WO-A-00/30268
- WO-A-00/38475
- US-A- 4 439 640

## Beschreibung

Die Erfindung betrifft ein Kommunikationsendgerät mit einer elektromagnetischen Sende- bzw. Empfangs-Antenne und wenigstens einer anregbaren Einrichtung zur akustischen Schallwandlung.

Kommunikationsendgeräte sind einem permanenten Verkleinerungsprozess unterworfen. Dieser macht es notwendig, den zur Verfügung stehenden Raum im Kommunikationsendgerät optimal zu nutzen. Einzelne Bauteile werden in ihrer Funktion optimiert und in ihrer Größe minimiert. Dies kann jedoch nur mit Kompromissen bezüglich der Funktion und der Größe des Bauteils geschehen. Davon sind auch Bauteile betroffen, deren Leistungsfähigkeit direkt von ihren geometrischen Abmessungen abhängen. Als Beispiel sei hier ein Lautsprecher und dessen wirksame Membranfläche oder eine in einem Mobiltelefon verwendete planare Antenne und deren Abmessungen genannt.

Aus WO 00/38475 ist ein Kommunikationsendgerät bekannt, dessen Gehäuse einen Lautsprecher und eine Antenne beinhaltet. Der Lautsprecher ist als akustische Resonanzkammer ausgebildet und ist entweder ganz oder nur teilweise in der als Träger dienenden elektromagnetischen Resonanzkammer der Antenne angeordnet. Dieses Dokument offenbart den Oberbegriff des unabhängigen Anspruchs 1.

Aus WO 00/30268 ist ein Funktelefon bekannt, das eine Patch-Antenne beinhaltet. Diese Patch-Antenne weist einen auf einer Antennenseite montierten "Speaker 35" auf, der über Löcher, die die Antenne durchdringen, mit einer "Front Face" verbunden ist.

Der Minimierung der einzelnen Bauteile folgt eine Zusammenfassung von verschiedenen Funktionen in einem Bauteil. Bei einem Mobiltelefon wird beispielsweise ein elektrodynamischer Schallwandler, auch Receiver genannt, verwendet. Der Receiver beinhaltet mehrere akustische Schallwandlungsfunktionen.

Hauptfunktion ist ein Betrieb des Receivers als Hörkapsel bei der typischen Verwendung eines Mobiltelefons am Ohr.

Daneben dient er zur Ruftongenerierung, auch Buzzerfunktion genannt. Hier wird der Receiver als Buzzer betrieben.

Bei Mobilfunkendgeräten ist oft noch zusätzlich eine Freisprech- bzw. eine Freihöroption mit einer zusätzlichen Lautsprecherfunktion für das freie Hören enthalten. Hier wird der Receiver als Lautsprecher betrieben.

Alle drei Funktionen stellen sehr unterschiedliche Anforderungen an den Receiver.

Bei der Ruftongenerierung werden hohe Schalldruckpegel über den Receiver erzeugt. Diese liegen typischerweise bei 100dB(A) in einem Abstand von 5 cm vom Receiver. Bei typischen Membrandurchmessern von 13 mm werden hohe Schalldruckpegel mittels eines resonativen Frequenzgangs des Receivers im Frequenzbereich von 2000 Hz bis 4000 Hz erzeugt.

Wird der Receiver als Hörkapsel für einen normalen Höreinsatz am Ohr betrieben, so arbeitet er auf ein mehr oder weniger geschlossenes Luftvolumen im Ohr, der sogenannten akustischen Last. Dabei soll er im Bereich von 300 Hz bis 3600 Hz einen flachen Frequenzgang aufweisen.

Die Freihöroption erfordert ebenfalls die Erzeugung hoher Schalldrücke. Um Sprache natürlich zu reproduzieren, ist eine Abstrahlung mit einem flachem Frequenzgang notwendig. Kleine Membrandurchmesser erlauben jedoch nur höhere Schalldrücke typischerweise ab 700 Hz, was Kompromisse in der Klangqualität zur Folge hat. Der Receiver arbeitet hier auf ein offenes Luftvolumen.

Bei einer Zusammenfassung der Funktionen Betrieb als Hörkapsel für den Höreinsatz am Ohr und der Buzzerfunktion für die Ruftongenerierung stehen sich deren Frequenzgangforderungen entgegen. Bei der Ruftongenerierung wird beträchtliche elektrische Leistung umgesetzt, die zur starken Erwärmung des Receivers führt.

Diese Erwärmung verkleinert die Lebensdauer des Receivers und verändert langfristig seinen Frequenzgang.

Bei einer Zusammenfassung der zusätzlichen Funktion für das freie Hören und der Funktion Betrieb als Hörkapsel in einem Receiver unterscheiden sich die angeschlossenen akustischen Lasten offenes bzw. geschlossenes Luftvolumen, auf das der Receiver arbeitet.

Fasst man nun alle drei geschilderten Funktionen in einem Receiver zusammen, so werden Kompromisse bei allen drei Funktionen eingegangen. Eine mögliche Begrenzung dieser Kompromisse durch digitale Signalverarbeitung ist nur im begrenzten Rahmen möglich, ohne den benötigten Dynamikbereich stark einzuschränken oder andere unerwünschte Nebeneffekte, wie Rauschen oder Verzerrungen, zu erzeugen.

In realisierten Mobiltelefonen sind diese drei Funktionen in einem sehr kleinen Receiver zusammengefasst.

Der vorliegenden Erfindung liegt die Aufgabe zugrunde, bei einem Kommunikationsendgerät eine Schallwandlungsfunktion platzsparend und ohne Beschränkungen von anderen Schallwandlungsfunktionen zu realisieren.

Die Aufgabe wird durch ein Kommunikationsendgerät mit den Merkmalen des ersten Anspruches gelöst. Vorteilhafte Weiterbildungen der Erfindung sind in den Unteransprüchen angegeben.

Bei einem Kommunikationsendgerät wird eine Funktion einer Ruftongenerierung aus einer Receiverbaugruppe herausgelöst und unter Benutzung einer vorhandenen Antenne realisiert.

In einem Mobiltelefon ist vorteilhafterweise oft eine flächig ausgeführte, planare Antenne vorhanden. Deren Fläche stellt nicht nur einen Teil der Sende- bzw. Empfangsantenne für elektromagnetische Wellen dar, sondern kann auch zur Schallerzeugung benutzt werden. Mit Hilfe dieser relativ großen zur Verfügung stehenden Fläche der Antenne kann eine entsprechend große Schalleistung erzeugt und abgestrahlt werden. Besonders geeignet sind hier verwendete planare Antennen wie z.B. Patch- oder PIF-Antennen, die aus einem planaren Strahler und einem Reflektor bestehen.

Für die verwendete Antenne sind jedoch beliebige Formen und Ausführungen möglich und nicht beschränkt auf die nachfolgende Ausführung. Bei den verwendeten Antennen ist es lediglich von Bedeutung, daß sie eine Fläche aufweisen, die zur Erzeugung von akustischen Schwingungen mitbenutzt werden kann. Denkbare Antennenstrukturen könnten beispielsweise auch auf nichtmetallische Träger aufgebracht werden. Diese könnten elektromechanisch oder elektrodynamisch zur Schallabstrahlung angeregt werden.

Die Antenne beinhaltet eine anregbare Einrichtung zur akustischen Schallwandlung. Diese Einrichtung kann sowohl einen elektromechanischen als auch einen elektrodynamischen Schallwandler enthalten.

Zur Schallerzeugung wird beispielsweise eine ausgeformte Membran in die Fläche einer planaren Antenne eingebracht. Die Membran besteht vorteilhafterweise aus Metall. Die Membran könnte als Materialverdünnung in der Antennenfläche ausgebildet sein und durchgehend oder nur teilweise mit der Antennenfläche verbunden sein.

Die Membran enthält vorteilhafterweise eine piezokeramische Schicht. Diese piezokeramische Schicht wird durch Anlegen einer elektrischen Spannung aufgrund des piezoelektrischen Effekts verformt. Damit wird auch die Membran verformt. Durch eine geeignete Ansteuerung der piezokeramischen Schicht können somit Schallwellen erzeugt und abgestrahlt werden.

Die verwendete Antennenfläche und damit auch die metallische Membran liegen vorteilhafterweise gleichstrommäßig auf einem Ausgleichspotential. Dadurch kann diese Antennenfläche als ein elektrischer Gegenkontakt der piezokeramischen Schicht benutzt werden. Somit ist eine einfache Ansteuerung der piezokeramischen Schicht mittels elektrischer Spannung möglich.

Piezoelektrische Werkstoffe sind durch eine ausgeprägte Wechselwirkung zwischen deren elektrischen und mechanischen Eigenschaften gekennzeichnet. Durch Anlegen eines elektrischen Feldes werden mechanische Verformungen hervorgerufen. Mechanischer Druck auf diese Materialien erzeugt hingegen elektrische Ladungen. Somit lassen sich mit der hier bezeichneten Struktur prinzipiell auch Schallsignale aufnehmen.

Durch diese Zusammenfassung entfällt die Bedingung des resonativen Frequenzganges der Ruftongenerierung im Receiver. Der weiterhin notwendige Receiver enthält nur noch die Funktion eines Lautsprechers für den normalen Hörbetrieb am Ohr und gegebenenfalls die eines Lautsprechers für eine Freihöroption.

Der Receiver ist jetzt von der Ruftongenerierung unabhängig. Dadurch werden die Einschränkungen und notwendigen Kompromisse im Receiver kleiner und man erhält mehr Freiheitsgrade für dessen Realisierung. Es ist jetzt möglich, die Funktionen im Receiver mit weniger Kompromissen besser zu optimieren.

Der Receiver selbst kann kleiner und damit platzsparender ausgeführt werden. Der Kosten- und Entwicklungsaufwand für eine Realisierung von drei Funktionen in einem Bauteil und zusätzlicher Aufwand an Bauteilen wird vermieden. Die Realisierung eines Kommunikationsendgerätes mit der hier vorgestellten Erfindung wird kostengünstiger.

Anwendungsgebiete der Erfindung finden sich bei allen Kommunikationsendgeräten mit Antennen, wie beispielsweise bei Mobiltelefonen und Schnurlostelefonen.

Im folgenden wird ein Ausführungsbeispiel der Erfindung anhand von Zeichnungen näher erläutert. Dabei zeigt
- FIG 1: eine Antennenfläche mit ausgeformter Membran und piezokeramischer Schicht
- FIG 2: einen Schnitt durch die Antennenfläche längs der Linie II - II aus FIG 1
- FIG 3: die Ruhelage der Membran mit piezokeramischer Schicht ohne angelegter Spannung
- FIG 4: die gespannte Membran mit piezokeramischer Schicht mit angelegter Spannung
- FIG 5: die gespannte Membran mit piezokeramischer Schicht mit angelegter invertierter Spannung

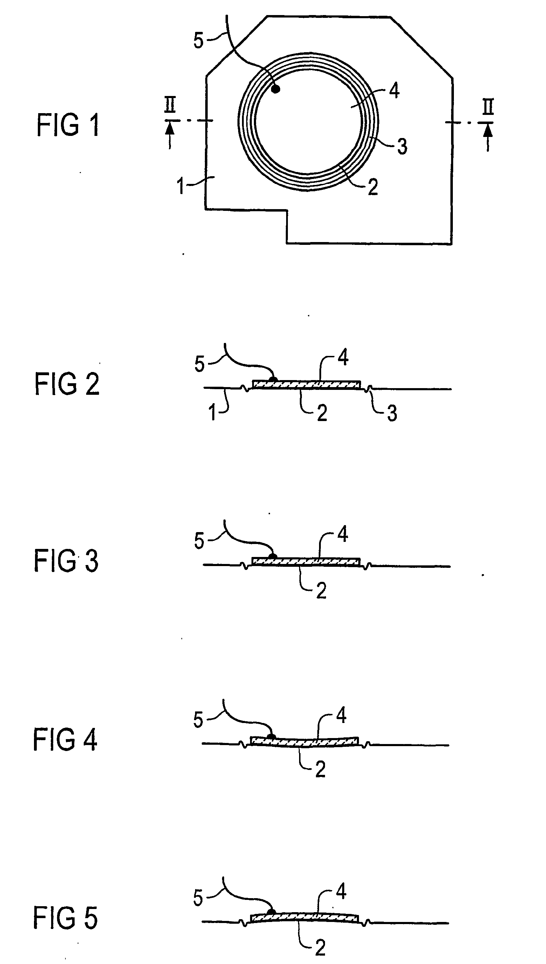

Die FIG 1 und FIG 2 zeigen eine Antennenfläche 1 einer planaren Antenne, eine ausgeformte Membran 2, eine ausgeformte Membransicke 3, eine auf der Membran 2 aufgebrachte piezokeramischen Schicht 4 und einen elektrischen Anschluß 5 der piezokeramischen Schicht 4. Ebenfalls ist in FIG 1 ein Schnitt längs der Schnittlinie II - II eingezeichnet, der nachfolgend in FIG 2 dargestellt wird.

Auf der Antennenfläche 1 ist die Membransicke 3 ausgeformt, wodurch die schwingfähige Membran 2 entsteht. Auf diese Membran 2 wird die piezokeramische Schicht 4 aufgebracht. Diese piezokeramische Schicht 4 wird über den elektrischen Anschluß 5 der piezokeramischen Schicht 4 kontaktiert. Mittels dieses elektrischen Anschlusses 5 der piezokeramischen Schicht 4 wird diese mit elektrischen Signalen angesteuert.

Die FIG 3 zeigt die Ruhelage der Membran 2, die auf ihr aufgebrachte piezokeramische Schicht 4 und den elektrischen Anschluss 5 der piezokeramischen Schicht 4.

Wird an diesem elektrischen Anschluß 5 der piezokeramischen Schicht 4 keine elektrische Spannung angelegt, so verformt sich die piezokeramische Schicht 4 nicht, die Membran 2 wird nicht mechanisch gespannt, es wird kein akustischer Schall erzeugt.

Die FIG 4 zeigt die angespannte Lage der Membran 2, die auf ihr aufgebrachte piezokeramische Schicht 4 und den elektrischen Anschluss 5 der piezokeramischen Schicht 4.

Wird an diesem elektrischen Anschluß 5 der piezokeramischen Schicht 4 eine elektrische Spannung angelegt, so verformt sich die piezokeramische Schicht 4 und die Membran 2 wird nach unten mechanisch gespannt. Durch den Übergang von der Ruhelage in die angespannte Lage wird akustischer Schall erzeugt.

Die FIG 5 zeigt die angespannte Lage der Membran 2, die auf ihr aufgebrachte piezokeramische Schicht 4 und den elektrischen Anschluss 5 der piezokeramischen Schicht 4.

Wird an diesem elektrischen Anschluß 5 der piezokeramischen Schicht 4 eine invertierte elektrische Spannung angelegt, so verformt sich die piezokeramische Schicht 4 und die Membran 2 wird nach oben mechanisch gespannt. Durch den Übergang von der Ruhelage in die angespannte Lage wird akustischer Schall erzeugt.

## Patentansprüche

1. Kommunikationsendgerät mit einer elektromagnetischen Sende- bzw. Empfangs-Antenne und wenigstens einer anregbaren Einrichtung zur akustischen Schallwandlung, bei der die Antenne wenigstens in einem Teilbereich eine Antennenfläche (1) aufweist, die als Träger für die anregbare Einrichtung ausgebildet ist,
**dadurch gekennzeichnet,**
**dass** die anregbare Einrichtung zur Schallwandlung eine aus einem Teilbereich der Antennenfläche (1) ausgeformte Membran (2) aufweist.

2. Kommunikationsendgerät nach Anspruch 1, **dadurch gekennzeichnet, dass** die Membran (2) elektrodynamisch oder elektromechanisch zur Schallwandlung anregbar ist.

3. Kommunikationsendgerät nach Anspruch 1 oder 2, **dadurch gekennzeichnet, dass** die Membran (2) zur akustischen Schallerzeugung ausgebildet ist.

4. Kommunikationsendgerät nach einem der vorhergehenden Ansprüche, **dadurch gekennzeichnet, dass** die Membran mittels einer Membransicke (3) ausgeformt ist.

5. Kommunikationsendgerät nach Anspruch 4, **dadurch gekennzeichnet, dass** die Membran (2) durch die Membransicke (3) durchgehend mit der sie umgebenden Antennenfläche (1) verbunden ist.

6. Kommunikationsendgerät nach Anspruch 4, **dadurch gekennzeichnet, dass** die Membran (2) durch die Membransicke (3) nur teilweise mit der sie umgebenden Antennenfläche verbunden ist.

7. Kommunikationsendgerät nach einem der vorhergehenden Ansprüche, **dadurch gekennzeichnet, dass** die Membran (2) als schwingfähiges Metall ausgebildet ist.

8. Kommunikationsendgerät nach einem der vorhergehenden Ansprüche, **dadurch gekennzeichnet, dass** die Membran (2) als Materialverdünnung im Teilbereich der Antenne ausgeführt ist.

9. Kommunikationsendgerät nach einem der vorhergehenden Ansprüche, **dadurch gekennzeichnet, dass** die Membran eine piezokeramische Schicht (4) aufweist.

10. Kommunikationsendgerät nach Anspruch 9, **dadurch gekennzeichnet, dass** die Antennenfläche (1) einen elektrischen Gegenkontakt (5) der piezokeramischen Schicht (4) aufweist.

11. Kommunikationsendgerät nach Anspruch 10, **dadurch gekennzeichnet, dass** der elektrische Gegenkontakt (5) der piezokeramischen Schicht (4) gleichstrommäßig auf einem Ausgleichspotential liegt.

12. Kommunikationsendgerät nach einem der vorhergehenden Ansprüche, **dadurch gekennzeichnet, dass** die Antenne als Patch-Antenne oder als PIF-Antenne ausgebildet ist.

## Claims

1. Communication terminal with an electromagnetic transmission or receiver antenna and at least one energizable device for acoustic sound conversion, in which at least part of the antenna has an antenna surface (1), which is configured as a support for the energizable device,
**characterized in that**,
the energizable device has a membrane (2) shaped from part of the antenna surface (1) for acoustic sound conversion.

2. Communication terminal according to claim 1, **characterized in that** the membrane (2) can be energized electrodynamically or electromechanically for acoustic sound conversion.

3. Communication terminal according to claim 1 or 2, **characterized in that** the membrane (2) is configured for acoustic sound generation.

4. Communication terminal according to one of the preceding claims, **characterized in that** the membrane is shaped by means of a membrane crease (3).

5. Communication terminal according to claim 4, **characterized in that** the membrane (2) is connected continuously through the membrane crease (3) to the surrounding antenna surface (1).

6. Communication terminal according to claim 4, **characterized in that** the membrane (2) is connected only partially through the membrane crease (3) to the surrounding antenna surface.

7. Communication terminal according to one of the preceding claims, **characterized in that** the membrane (2) is configured as a metal capable of oscillation.

8. Communication terminal according to one of the preceding claims, **characterized in that** the membrane (2) is configured as a thinner section of material in part of the antenna.

9. Communication terminal according to one of the preceding claims, **characterized in that** the membrane has a piezoceramic layer (4).

10. Communication terminal according to claim 9, **characterized in that** the antenna surface (1) has an electrical counter-contact (5) for the piezoceramic layer (4).

11. Communication terminal according to claim 10, **characterized in that** the electrical counter-contact (5) for the piezoceramic layer (4) is applied to a direct-current balancing potential.

12. Communication terminal according to one of the preceding claims, **characterized in that** the antenna is configured as a patch antenna or a PIF antenna.

## Revendications

1. Terminal de communication comprenant une antenne d'émission resp. de réception électromagnétique et au moins un appareil excitable pour la transduction acoustique, sur lequel l'antenne présente au moins dans une zone partielle une surface d'antenne (1) qui est conçue comme support pour l'appareil excitable,
**caractérisé en ce que** l'appareil excitable pour la transduction présente une membrane (2) formée d'une zone partielle de la surface d'antenne (1).

2. Terminal de communication selon la revendication 1, **caractérisé en ce que** la membrane (2) peut être excitée de façon électrodynamique ou électromécanique pour la transduction.

3. Terminal de communication selon la revendication 1 ou 2, **caractérisé en ce que** la membrane (2) est conçue pour la génération acoustique.

4. Terminal de communication selon l'une quelconque des revendications précédentes, **caractérisé en ce que** la membrane est formée au moyen d'une moulure de membrane (3).

5. Terminal de communication selon la revendication 4, **caractérisé en ce que** la membrane (2) est reliée par la moulure de membrane (3) de façon continue à la surface d'antenne (1) qui l'entoure.

6. Terminal de communication selon la revendication 4, **caractérisé en ce que** la membrane (2) est reliée par la moulure de membrane (3) seulement partiellement à la surface d'antenne qui l'entoure.

7. Terminal de communication selon l'une quelconque des revendications précédentes, **caractérisé en ce que** la membrane (2) est conçue comme métal pouvant vibrer.

8. Terminal de communication selon l'une quelconque des revendications précédentes, **caractérisé en ce que** la membrane (2) est conçue comme amincissement de matériau dans la zone partielle de l'antenne.

9. Terminal de communication selon l'une quelconque des revendications précédentes, **caractérisé en ce que** la membrane présente une couche (4) piézo-céramique.

10. Terminal de communication selon la revendication 9, **caractérisé en ce que** la surface d'antenne (1) présente un contre-contact (5) électrique de la couche (4) piézo-céramique.

11. Terminal de communication selon la revendication 10, **caractérisé en ce que** le contre-contact (5) électrique de la couche (4) piézo-céramique se situe sur un potentiel d'équilibre en ce qui concerne le courant continu.

12. Terminal de communication selon l'une quelconque des revendications précédentes, **caractérisé en ce que** l'antenne est conçue comme antenne Patch ou comme antenne PIF.
